# EUROPÄISCHE PATENTSCHRIFT

(11) **EP 2 612 000 B1**
(45) Veröffentlichungstag und Bekanntmachung des Hinweises auf die Patenterteilung: **12.07.2017**
(21) Anmeldenummer: 11746560.9
(22) Anmeldetag: 22.08.2011
(51) Int. Cl.: F01N 3/027

(54) **VORRICHTUNG MIT EINER RINGFÖRMIGEN ELEKTRODE ZUR VERRINGERUNG VON RUßPARTIKELN IM ABGAS EINER VERBRENNUNGSKRAFTMASCHINE**
DEVICE HAVING AN ANNULAR ELECTRODE FOR REDUCING SOOT PARTICLES IN THE EXHAUST GAS OF AN INTERNAL COMBUSTION ENGINE
DISPOSITIF POURVU D'UNE ÉLECTRODE ANNULAIRE POUR RÉDUIRE LES PARTICULES DE SUIE DANS LES GAZ D'ÉCHAPPEMENT D'UN MOTEUR À COMBUSTION INTERNE

(30) Priorität: 03.09.2010 DE 102010044343
(43) Veröffentlichungstag der Anmeldung: 10.07.2013
(73) Patentinhaber: Continental Automotive GmbH, 30165 Hannover (DE)
(72) Erfinder: HODGSON, Jan, 53840 Troisdorf (DE); VORSMANN, Christian, 51105 Köln (DE); BRÜCK, Rolf, 51429 Bergisch Gladbach (DE)
(86) Internationale Anmeldenummer: PCT/EP2011/064408
(87) Internationale Veröffentlichungsnummer: WO 2012/028486

(56) Entgegenhaltungen:
- EP-A1- 1 674 160
- EP-A1- 1 757 368
- FR-A1- 2 843 611
- US-A1- 2003 098 230

## Beschreibung

Gegenstand der vorliegenden Erfindung ist eine Vorrichtung zur Verringerung von Rußpartikeln im Abgas einer Verbrennungskraftmaschine.

Verbrennungskraftmaschinen, die mit Kohlenwasserstoffen als Kraftstoff betrieben werden, emittieren ein Abgas, das unter anderem auch kohlenstoffhaltige Partikel enthält. Diese kohlenstoffhaltigen Partikel oder im Abgas auch auftretende Ascheteilchen weisen verschiedene Größen auf, deren Verteilung von vielen Bedingungen abhängt. Insbesondere Partikel mit kleinen Durchmessern, die auch als Feinstaub bezeichnet werden, sollen für Erkrankungen von Mensch und Tier verantwortlich sein. Unter Feinstaub werden hier insbesondere Partikel verstanden, deren mittlerer Durchmesser 100 Nanometer oder weniger beträgt. Kohlenstoffhaltige Partikel umfassen insbesondere auch Kohlenstoffpartikel gegebenenfalls mit angelagerten Kohlenwasserstoffen.

Zur Reduktion der Partikelemissionen, insbesondere in Kraftfahrzeugen, werden oftmals so genannte geschlossene Partikelfilter eingesetzt, bei denen eine Struktur von Abgas durchströmt wird, die wechselweise verschlossene Kanäle und zwischen den Kanälen poröse Wände aufweist. Um einen möglichst geringen Gegendruck des Partikelfilters auch im bereits beladenen Zustand zu gewährleisten, müssen Porositäten eingesetzt werden, die gerade den Feinstaub im Wesentlichen noch ungefiltert passieren lassen.

Es ist auch bekannt, dass durch die Bereitstellung eines elektrischen Feldes und/oder eines Plasmas eine Agglomeration von kleinen Rußpartikeln und/oder Aschepartikeln zu größeren Partikeln und/oder eine elektrische Ladung bei Partikeln bewirkt werden. Elektrisch geladene Partikel und/oder größere Partikel sind regelmäßig in einem Filtersystem deutlich einfacher abzuscheiden. Rußpartikel-Agglomerate werden aufgrund ihrer größeren Massenträgheit in einer Abgasströmung träger transportiert und lagern sich an Umlenkstellen einer Abgasströmung somit einfacher ab. Elektrisch geladene Rußpartikel werden aufgrund ihrer Ladung hin zu entgegengesetzt geladenen Oberflächen gezogen, an welchen sie anlagern und ihre Ladung abgeben. Auch dies erleichtert die Entfernung von Rußpartikeln aus dem Abgasstrom im Betrieb von Kraftfahrzeugen mit verschiedenen Filter- oder Abscheideeinrichtungen.

Die Wirksamkeit eines elektrischen Feldes für die beschriebenen Vorgänge hängt unter anderem von der Feldstärke, der Homogenität des elektrischen Feldes im Wirkungsbereich und seiner Reproduzierbarkeit über lange Zeiträume ab. Man unterscheidet Vorrichtungen mit etwa in Strömungsrichtung eines Abgases gerichteten axialen elektrischen Feldern und Vorrichtungen mit transversal zur Strömungsrichtung gerichteten radialen elektrischen Feldern. Bei letzteren ist es besonders schwierig, eine homogene Feldverteilung zu erreichen, die den Abgasstrom möglichst vollständig erfasst.

Die US-A1-2003/0098230 betrifft eine Vorrichtung zur Behandlung von Abgasen, wobei ein Filterelement im Abgas enthaltene Rußpartikel herausfiltern soll. Das Filterelement wird mit einer nichtthermischen Plasmaentladung regeneriert. Dafür wird das Filterelement zwischen einer geerdeten Elektrode und einer mit einer dielektrischen Schicht versehenen Hochspannungselektrode angeordnet. Die in dem Filter zurückgehaltenen Partikel werden durch Anlegen einer Hochspannung in verstärktem Maße umgesetzt.

In der EP-A1-1 757 368 wird eine stabförmige Elektrode offenbart, die als Corona-Elektrode eingesetzt wird und entsprechend einen Zwischenraum zwischen einem Außenrohr und der Corona-Elektrode ionisiert. Das Außenrohr weist eine strukturierte Oberfläche zur verbesserten Partikelaufnahme auf.

Die EP-A1-1 674 160 offenbart eine stabförmige innere Elektrode, die zur Ionisation eines Zwischenraumes zwischen Außenrohr und stabförmiger Elektrode eingesetzt wird.

Die FR 2 843 611 A1 offenbart einen Elektrofilter, wobei zwischen einem Außenrohr und einem Innenrohr ein elektrisches Potential gebildet wird. Das Innenrohr weist eine Oberfläche auf, die zur Anlagerung von Partikeln geeignet ausgeführt ist. Diese Filteroberfläche kann durch ein innenliegendes Heizelement gereinigt werden.

Der hier vorliegenden Erfindung liegt nunmehr die Aufgabe zugrunde, dieses Problem zumindest teilweise zu lösen und insbesondere eine gegenüber dem Stand der Technik verbesserte Vorrichtung zur Erzeugung eines elektrischen Feldes für ein mobiles Abgasbehandlungssystem zu offenbaren.

Diese Aufgabe wird gelöst mit einer Vorrichtung gemäß den Merkmalen des Patentanspruchs 1. Vorteilhafte Ausgestaltungen der Vorrichtung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die erfindungsgemäße Vorrichtung zur Verringerung von Rußpartikeln in einem Abgas, insbesondere in einem Abgas eines Verbrennungsmotors, weist ein Außenrohr und ein dazu konzentrisch angeordnetes Innenrohr auf, die einen von dem Abgas durchströmbaren Zwischenraum bilden, wobei an dem Außenrohr mindestens eine ringförmige Elektrode mit einer Vielzahl von radial in den Zwischenraum ragenden Elektrodenspitzen angeordnet ist und wobei Anschlüsse zur Verbindung der ringförmigen Elektrode und des Innenrohrs mit einer Hochspannungsquelle zur Ausbildung eines radialen elektrischen Feldes im Zwischenraum vorhanden sind. Die Anordnung vieler Elektrodenspitzen, die von außen nach innen gerichtet sind, ermöglicht eine besonders gleichmäßige Ionisierung in dem Zwischenraum zwischen Außenrohr und Innenrohr. Kleine Deformationen des Außenrohrs und andere Abweichungen von einer optimalen Geometrie haben nur einen geringen Einfluss auf Spitzenentladungen an den Elektrodenspitzen, so dass ein relativ homogenes Feld im Zwischenraum herrscht und eine hohe Wahrscheinlichkeit für eine Ionisierung von Abgasbestandteilen im Zwischenraum besteht.

Mit ringförmig ist insbesondere gemeint, dass die axiale Ausdehnung der Elektrode in axialer Richtung kleiner ist als die Ausdehnung in radialer Richtung. So weist die ringförmige Elektrode in axialer Richtung bevorzugt eine Länge von maximal 20 cm [Zentimeter], besonders bevorzugt maximal 10 cm oder sogar maximal 6 cm auf.

Je nach der Wahl des Bezugspotentials kann es erforderlich sein, ringförmige Elektroden durch eine elektrische Isolierung von dem Außenrohr zu trennen, was einer bevorzugten Ausführungsform der Erfindung entspricht.

Alternativ befindet sich in einem anderen Ausführungsbeispiel die ringförmige Elektrode mit dem Außenrohr auf Massepotential, wobei dann das Innenrohr elektrisch isoliert im Außenrohr angeordnet sein muss, um eine Hochspannung anlegen zu können. In diesem Falle wird eine positive Spannung an das Innenrohr angelegt.

Eine weitere Möglichkeit besteht darin, das Innenrohr und das Außenrohr mit Massepotential zu verbinden und die ringförmige Elektrode von beiden elektrisch isoliert anzuordnen.

Erfindungsgemäß werden zur Erhöhung der Ionisierungsrate zwei oder mehr ringförmige Elektroden axial hintereinander angeordnet, wobei der jeweilige Elektrodenabstand 10 bis 30 mm in axialer Richtung beträgt. Auf diese Weise lässt sich ein ionisierendes elektrisches Feld über einen längeren Teilbereich des Zwischenraums aufbauen, was den Wirkungsgrad bei der Ionisierung erhöht.

Die Elektrodenspitzen können sehr unterschiedlich, auch nicht rotationssymmetrisch geformt sein, sind aber vorzugsweise kegelförmig oder stiftförmig ausgestaltet und weisen eine radiale Länge von 3 bis 10 mm auf. Diese Ausgestaltung stört die Abgasströmung im Zwischenraum nur geringfügig, ist aber geeignet, die gewünschten Spitzenentladungen, auch Corona-Entladungen genannt, gleichmäßig zu verteilen. Insbesondere kegelförmige Elektrodenspitzen sind widerstandsfähig gegen Verformungen und Abnutzungen.

Die Elektrodenspitzen jeder ringförmigen Elektrode haben in Umfangsrichtung erfindungsgemäß einen Spitzenabstand von 3 bis 20 mm, vorzugsweise 5 bis 10 mm. Auf diese Weise lassen sich viele Elektrodenspitzen gleichmäßig am Umfang eines Abgassystems unterbringen.

Werden gemäß einer weiteren bevorzugten Ausführungsform mehrere Elektroden axial hintereinander angeordnet, so sollten die Elektrodenspitzen von axial benachbarten ringförmigen Elektroden in axialer Richtung nicht miteinander fluchten, sondern insbesondere regelmäßig zueinander versetzt angeordnet sein. Bei gleicher Anzahl Elektrodenspitzen in den ringförmigen Elektroden sollten diese in Umfangsrichtung um einen halben Spitzenabstand gegeneinander versetzt angeordnet werden.

Weitere Einzelheiten der Erfindung werden anhand eines Ausführungsbeispiels, auf welches die Erfindung jedoch nicht beschränkt ist, unter Bezugnahme auf die Zeichnung näher erläutert. Es zeigen:
- Fig. 1:: einen schematischen Querschnitt durch eine erfindungsgemäße Vorrichtung, und
- Fig. 2:: eine schematische perspektivische Längsansicht dieser Vorrichtung.

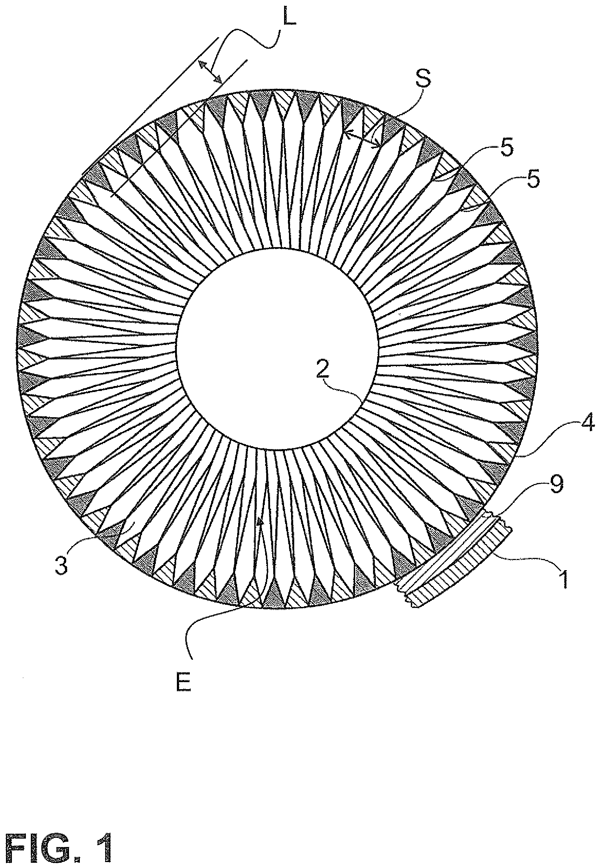

In Fig. 1 bilden ein Außenrohr 1 und ein Innenrohr 2 einen Zwischenraum 3, der von einem Abgas durchströmbar ist. Eine ringförmige Elektrode 4, die durch eine elektrische Isolierung 9 isoliert innen am Außenrohr 1 angeordnet ist, trägt eine Vielzahl von Elektrodenspitzen 5, die radial nach innen gerichtet sind. Die Elektrodenspitzen haben jeweils einen Länge L und einen jeweiligen Spitzenabstand S. Bei Anlegen einer Hochspannung zwischen Innenrohr 2 und ringförmiger Elektrode 4 bildet sich ein radiales elektrisches Feld E in dem Zwischenraum 3 aus, wobei bei genügend Vorspannung Corona-Entladungen an den Elektrodenspitzen 5 auftreten. Bevorzugte Wege austretender Elektronen in Richtung auf das Innenrohr 2 sind in Fig. 1 durch langgestreckte Dreiecke angedeutet. Es ist erkennbar, dass insbesondere nahe dem Innenrohr 2 eine nahezu gleichmäßige Dichte von Elektronen zu erwarten ist. Diese Elektronen ionisieren bei Kollisionen Bestandteile des Abgases, insbesondere Rußpartikel, und begünstigen so deren Agglomeration und/oder Anlagerung an einem hier nicht dargestellten nachfolgenden Filterkörper. Die Abscheiderate in einem Partikelfilter wird dadurch verbessert.

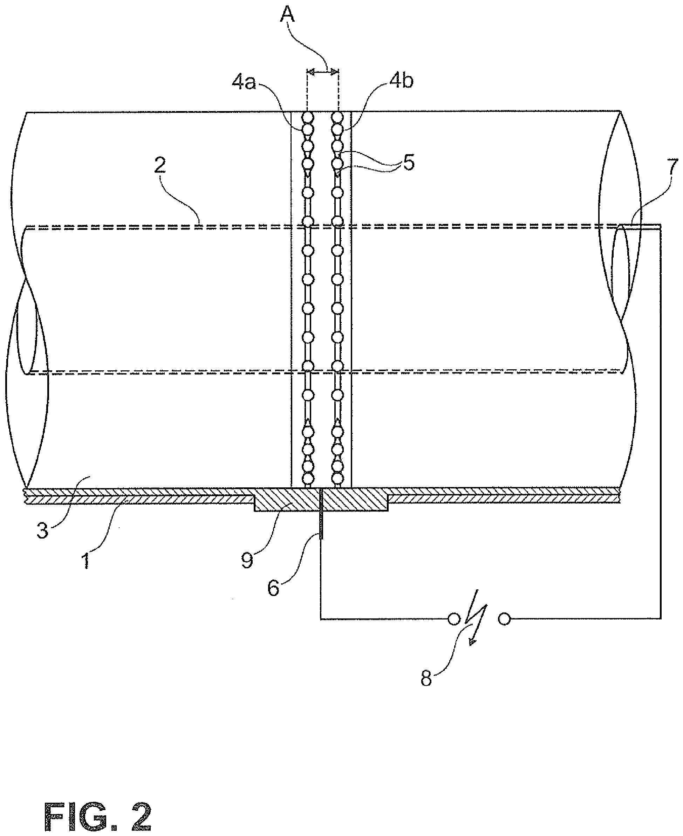

Fig. 2 zeigt eine perspektivische Längsansicht der erfindungsgemäßen Vorrichtung, in diesem Falle mit zwei in axialer Richtung hintereinander angeordneten ringförmigen Elektroden 4a, 4b, die beide mit zahlreichen Elektrodenspitzen 5 bestückt sind. Die beiden ringförmigen Elektroden haben in axialer Richtung untereinander einen Abstand A. Eine elektrische Isolierung 9 trennt die ringförmigen Elektroden 4a, 4b von dem Außenrohr 1, wobei ein erster Anschluss 6 zur Verbindung der ringförmigen Elektroden 4a, 4b mit einer Hochspannungsquelle 8 vorgesehen ist. Ein zweiter Anschluss 7, hier schematisch angedeutet, dient zum Anschluss des Innenrohrs 2 an die Hochspannungsquelle 8.

Die vorliegende Erfindung ermöglicht in Verbindung mit einem nachgeschalteten Partikelfilter eine gleichmäßige und an verschiedene Betriebsbedingungen anpassbare Abgasreinigung mit geringer Störanfälligkeit bei der Verwendung von ionisierenden Hochspannungen.

### Bezugszeichenliste

- 1: Außenrohr
- 2: Innenrohr
- 3: Zwischenraum
- 4: 4a, 4b Ringförmige Elektrode
- 5: Elektrodenspitzen
- 6: Erster Anschluss
- 7: Zweiter Anschluss
- 8: Hochspannungsquelle
- 9: Elektrische Isolierung

- E: Elektrisches Feld
- L: Länge
- A: Elektrodenabstand
- S: Spitzenabstand

## Patentansprüche

1. Vorrichtung zur Verringerung von Rußpartikeln in einem Abgas, insbesondere einem Abgas eines Verbrennungsmotors, aufweisend ein Außenrohr (1) und ein dazu konzentrisch angeordnetes Innenrohr (2), die einen von dem Abgas durchströmbaren Zwischenraum (3) bilden, **dadurch gekennzeichnet, dass** innen an dem Außenrohr (1) mindestens eine ringförmige Elektrode (4) mit einer Vielzahl von radial in den Zwischenraum ragenden Elektrodenspitzen (5) angeordnet ist, wobei Anschlüsse (6, 7) zur Verbindung der ringförmigen Elektrode (4) und des Innenrohres (2) mit einer Hochspannungsquelle (8) zur Ausbildung eines radialen elektrischen Feldes (E) im Zwischenraum (3) vorhanden sind, so dass eine gleichmäßige Ionisierung in dem Zwischenraum (3) zwischen Außenrohr (1) und Innenrohr (2) ermöglicht wird; wobei von der ringförmigen Elektrode ausgetretene Elektronen (4) sich hin zum Innenrohr (2) bewegen; wobei mindestens zwei ringförmige Elektroden (4a, 4b) axial hintereinander mit einem jeweiligen Elektrodenabstand (A) von 10 bis 30 mm angeordnet sind.

2. Vorrichtung nach Anspruch 1, wobei die mindestens eine ringförmige Elektrode (4) durch eine elektrische Isolierung (9) von dem Außenrohr (1) getrennt ist.

3. Vorrichtung nach Anspruch 1, wobei das Außenrohr (1) und die ringförmige Elektrode (4) mit Massepotential verbindbar sind und das Innenrohr (2) elektrisch isoliert im Außenrohr (1) angeordnet ist.

4. Vorrichtung nach Anspruch 1 oder 2, wobei das Außenrohr (1) und das Innenrohr (2) mit Massepotential verbindbar sind.

5. Vorrichtung nach einem der vorhergehenden Ansprüche, wobei die Elektrodenspitzen (5) etwa kegelförmig oder stiftförmig ausgestaltet sind und eine radiale Länge (L) von 3 bis 10 mm aufweisen.

6. Vorrichtung nach einem der vorhergehenden Ansprüche, wobei auf jeder ringförmigen Elektrode (4) die Elektrodenspitzen (5) in Umfangsrichtung einen Spitzenabstand (S) von 3 bis 20 mm, vorzugsweise 5 bis 10 mm, aufweisen.

7. Vorrichtung nach einem der vorhergehenden Ansprüche, wobei die Elektrodenspitzen (5) von axial benachbarten ringförmigen Elektroden (4a, 4b) in axialer Richtung nicht miteinander fluchten, insbesondere regelmäßig zueinander versetzt angeordnet sind.

## Claims

1. Device for reducing soot particles in an exhaust gas, in particular in an exhaust gas of a combustion engine, comprising an outer tube (1) and an inner tube (2) that is arranged in a concentric manner with respect thereto, which tubes form an intermediate space (3) through which the exhaust gas can flow, **characterized in that** at least one annular electrode (4) having a plurality of electrode tips (5) that protrude radially into the intermediate space is arranged on the inside of the outer tube (1), wherein terminals (6, 7) for connecting the annular electrode (4) and the inner tube (2) to a high voltage source (8) are provided for generating a radial electric field (E) in the intermediate space (3), so that a uniform ionization is rendered possible in the intermediate space (3) between the outer tube (1) and the inner tube (2); wherein electrons (4) that have exited the annular electrodes move towards the inner tube (2); wherein at least two annular electrodes (4a, 4b) are arranged axially one behind the other at a respective electrode spacing (A) of 10 to 30 mm.

2. Device according to Claim 1, wherein the at least one annular electrode (4) is separated from the outer tube (1) by an electric insulator (9).

3. Device according to Claim 1, wherein the outer tube (1) and the annular electrode (4) can be connected to ground potential and the inner tube (2) is arranged in the outer tube (1) in an electrically insulated manner.

4. Device according to Claim 1 or 2, wherein the outer tube (1) and the inner tube (2) can be connected to ground potential.

5. Device according to any one of the preceding claims, wherein the electrode tips (5) are embodied, for example, in a conical or pin-shaped manner and have a radial length (L) of 3 to 10 mm.

6. Device according to any one of the preceding claims, wherein the electrode tips (5) on each annular electrode (4) comprise a tip spacing (S) of 3 to 20 mm, preferably 5 to 10 mm, in the circumferential direction.

7. Device according to any one of the preceding claims, wherein the electrode tips (5) of axially adjacent annular electrodes (4a, 4b) are not aligned with each other in the axial direction, they are arranged in particular offset with respect to each other at regular intervals.

## Revendications

1. Dispositif pour réduire les particules de suie dans les gaz d'échappement, en particulier dans les gaz d'échappement d'un moteur à combustion interne, présentant un tube extérieur (1) et un tube intérieur (2) qui est disposé de façon concentrique à celui-ci et qui forment un espace intermédiaire (3) pouvant être balayé par les gaz d'échappement, **caractérisé en ce que**, intérieurement sur le tube extérieur (1), il est disposé au moins une électrode (4) de forme annulaire avec une multiplicité de pointes d'électrodes (5) dépassant radialement dans l'espace intermédiaire, des connexions (6, 7) étant présentes pour le raccordement de l'électrode (4) de forme annulaire et du tube intérieur (2) avec une source de haute tension (8) destinée à la formation d'un champ électrique (E) radial dans l'espace intermédiaire (3) de telle sorte qu'une ionisation uniforme est rendue possible dans l'espace intermédiaire (3) entre le tube extérieur (1) et le tube intérieur (2) ; des électrons (4) sortant de l'électrode de forme annulaire se déplaçant vers le tube intérieur (2) ; au moins deux électrodes (4a, 4b) de forme annulaire étant disposées l'une derrière l'autre axialement avec un intervalle d'électrodes (A) respectif de 10 à 30 mm.

2. Dispositif selon la revendication 1, l'électrode (4) de forme annulaire au moins au nombre de un étant séparée du tube extérieur (1) par une isolation (9) électrique.

3. Dispositif selon la revendication 1, le tube extérieur (1) et l'électrode (4) de forme annulaire pouvant être raccordés à un potentiel de masse, et le tube intérieur (2) étant disposé dans le tube extérieur (1) de façon électriquement isolée.

4. Dispositif selon la revendication 1 ou 2, le tube extérieur (1) et le tube intérieur (2) pouvant être raccordés à un potentiel de masse.

5. Dispositif selon l'une des revendications précédentes, les pointes d'électrodes (5) étant constituées à peu près en forme de cône ou en forme de barre et présentant une longueur radiale (L) de 3 à 10 mm.

6. Dispositif selon l'une des revendications précédentes, les pointes d'électrodes (5) formant, sur chaque électrode (4) de forme annulaire, dans la direction circonférentielle, un écart entre pointes (S) de 3 à 20 mm, de préférence de 5 à 10 mm.

7. Dispositif selon l'une des revendications précédentes, les pointes d'électrodes (5) d'électrodes (4a, 4b) de forme annulaire voisines n'étant pas alignées les unes avec les autres dans la direction axiale, étant en particulier décalées les unes par rapport aux autres de façon régulière.
